# EUROPEAN PATENT APPLICATION

(11) **EP 3 623 149 A1**
(43) Date of publication of application: **18.03.2020**
(21) Application number: 18798725.0
(22) Date of filing: 16.04.2018
(51) Int. Cl.: B32B 15/01, B32B 9/00, C03C 17/36, C03C 27/12, E06B 5/00, G02B 1/115

(54) **SOLAR RADIATION SHIELDING MEMBER**

(30) Priority: 12.05.2017 JP 2017095342
(71) Applicant: Central Glass Company, Limited, Yamaguchi 755-0001 (JP)
(72) Inventor: HORIE, Yuki, Matsusaka-shi Mie 515-0001 (JP); KATO, Kazuhiro, Matsusaka-shi Mie 515-0001 (JP)
(74) Representative: Manitz Finsterwald Patent- und Rechtsanwaltspartnerschaft mbB
(86) International application number: PCT/JP2018/015648
(87) International publication number: WO 2018/207555

(57) **Abstract**

A solar radiation shielding member according to one embodiment of the present invention includes a low radiation film sheet having a first dielectric film, a first metal film, a second dielectric film, a second metal film, a third dielectric film, a third metal film and a fourth dielectric film laminated in order of mention on a transparent substrate, wherein the first dielectric film has: a dielectric layer A arranged directly above the transparent substrate and containing silicon and nitrogen; and a dielectric layer B arranged on the dielectric layer A and containing titanium and oxygen, wherein the dielectric layer A has an optical thickness of 12 to 86 run, wherein the first, second and third dielectric films have respective crystalline dielectric layers as top layers thereof, wherein the crystalline dielectric layers each have an optical thickness of 5 to 54 nm, and wherein the first, second and third metal films are Ag films directly below which the crystalline dielectric layers are arranged, respectively.

## Description

### Field of the Invention

The present invention relates to a solar radiation shielding member in which a low radiation film sheet with three Ag films is arranged on a transparent substrate, and more particularly of the type having improved heat resistance.

### Background Art

For the purpose of reducing the use of air conditioning in the interiors of buildings and vehicles, solar radiation shielding members are widely used for windows in openings of the buildings and vehicles so as to shield the entry of solar radiation into the interiors of the buildings and vehicles. As the solar radiation shielding member, widely known is a low radiation glass in which a low radiation film sheet is arranged on a surface of a glass plate.

The low radiation film sheet widely used is a laminated film sheet having an Ag film laminated between transparent dielectric films. In particular, a low radiation film sheet with two Ag films (e.g. a low radiation film sheet in which a first transparent dielectric film, an Ag film, a second transparent dielectric film, an Ag film and a third transparent dielectric film are laminated in this order on a glass plate) has a high solar radiation shielding function. There have thus been made studies on various solar radiation shielding members using such low radiation film sheets.

The solar radiation shielding member has a tendency that the larger the total thickness of the Ag films, the more improved the solar radiation shielding function. Heretofore, it has been appropriate to form the low radiation film sheet with two Ag films in view of tradeoff between the cost and the performance required. With the recent growing demand for further improvement of the solar radiation shielding function, however, studies are being made on the formation of a low radiation film sheet with three Ag films (see Patent Document 1).

Herein, not only simple plate glasses but also processed glasses such as laminated glasses, bent glasses and tempered glasses are used for buildings and vehicles. The production processes of the processed glasses involve heating. In the production of the laminated glass, for example, the heating is generally performed at about 90 to 150°C. Bending work for the production of the bent glass and physical tempering treatment such as air-cooling tempering treatment for the production of the tempered glass are generally performed in the air under the heating at about 550 to 720°C.

Patent Document 2 proposes a laminated glass using a low radiation film sheet formed with three Ag films as mentioned above, and specifically discloses an example of the laminated glass including a glass plate and a solar radiation shielding member with a low radiation film sheet in which films of Sn-doped ZnO (hereinafter also referred to as "ZnSnO"), ZnO, Ag, Ti, ZnO, ZnSnO, ZnO, Ag, Ti, ZnO, ZnSnO, ZnO, Ag, Ti, ZnO and ZnSnO are laminated in this order on a glass substrate.

Patent Document 3 proposes a bent glass using a low radiation film sheet formed with three Ag films, and specifically discloses an example of the bent glass produced by bending at 640°C a solar radiation shielding member with a low radiation film sheet in which films of Si₃N₄, ZnSnO, ZnO, Ag, NiCr, ZnO, Si₃N₄, ZnO, Ag, NiCr, ZnO, Si₃N₄, ZnSnO, ZnO, Ag, NiCr, ZnO and Si₃N₄ are laminated in this order on a glass substrate.

Patent Document 4 proposes a tempered glass using a low radiation film sheet formed with three Ag films, and specifically discloses an example of the tempered glass produced by heat-treating at 620°C a solar radiation shielding member with a low radiation film sheet in which films of Si₃N₄, ZnO, Ag, Ti, ZnO, Si₃N₄, ZnO, Ag, Ti, ZnO, Si₃N₄, ZnO, Ag, Ti, ZnO and Si₃N₄ are laminated in this order on a glass substrate.

### Prior Art Documents

### Patent Documents

Patent Document 1: Japanese Laid-Open Patent Publication (Japanese Translation of International Application) No. 2005-516818
Patent Document 2: Japanese Laid-Open Patent Publication (Japanese Translation of International Application) No. 2010-536707
Patent Document 3: Japanese Laid-Open Patent Publication (Japanese Translation of International Application) No. 2013-502366
Patent Document 4: Japanese Laid-Open Patent Publication (Japanese Translation of International Application) No. 2007-512218

### Summary of the Invention

### Problems to be Solved by the Invention

As mentioned above, processed glasses are used as glass plates for buildings and vehicles. Further, the use of the above-mentioned solar radiation shielding members with low radiation film sheets for processed glasses has recently been studied. However, The processed glasses are respectively produced through a heating step. Since it is likely that the Ag films of the low radiation film sheet will be oxidized or aggregated by heat, the low radiation film sheet causes an increase of haze and degradation of appearance quality due to the occurrence of minute defects during the heating step. The low radiation film sheet also causes an increase of surface resistance and degradation of solar radiation shielding performance with deterioration of the Ag films. In this way, there has been a problem that the Ag films are largely deteriorated during the heating step.

In view of the foregoing, it is an object of the present invention to provide a low radiation film sheet having heat resistance usable for a processed glass whose production process involves heating.

### Means for Solving the Problems

The present inventors have found, as a result of extensive researches made to achieve the above object, that a low radiation film sheet with Ag films is significantly improved in heat resistance by arranging a layer of Al-doped Si₃N₄ (hereinafter also referred to as "SiAlN") directly above a glass plate and arranging a TiO₂ layer on the layer of SiAlN.

According to one aspect of the present invention, there is provided a solar radiation shielding member, comprising: a transparent substrate; a low radiation film sheet including a first dielectric film, a first metal film, a second dielectric film, a second metal film, a third dielectric film, a third metal film and a fourth dielectric film laminated in order of mention on the transparent substrate, wherein the first dielectric film has: a dielectric layer A arranged directly above the transparent substrate and containing silicon and nitrogen; and a dielectric layer B arranged on the dielectric layer A and containing titanium and oxygen, wherein the dielectric layer A has an optical thickness of 12 to 86 nm, wherein the first, second and third dielectric films respectively have crystalline dielectric layers as uppermost layers thereof, wherein the crystalline dielectric layers each have an optical thickness of 5 to 54 nm, and wherein the first, second and third metal films are Ag films directly below which the crystalline dielectric layers are arranged, respectively.

### Effects of the Invention

In the present invention, the low radiation film sheet achieves heat resistance usable for various processed glasses which have been processed through heating.

### Brief Description of the Drawings

FIG. 1 is a schematic cross-sectional view of a solar radiation shielding member according to one embodiment of the present invention.
FIG. 2 is a schematic view of a laminated glass using the solar radiation shielding member.

### Detailed Description of the Embodiments

### 1. Explanation of Terms

Hereinafter, an explanation will be given of the terms used in the present specification.

### (Various Wavelength Lights)

In the present specification, the "visible light" refers to a light with a wavelength of 380 nm to 780 nm. Further, the "solar radiation shielding" means to shield the transmission of light energy with a wavelength of 300 nm to 2500 nm.

### (Visible Light Transmittance and Various Hues)

The visible light transmittance and the transmitted and reflected hues with visible light irradiation respectively refer to values measured with an automatic recording spectrophotometer (manufactured as "U-4000" by Hitachi, Ltd.). The reflected hue is measured at each of the transparent substrate side (also referred to as "glass plate side" in the case of using a glass plate as the transparent substrate) at which no low radiation film sheet is provided and the film surface side at which the low radiation film sheet is provided. The visible light transmittance is determined by a method according to JIS R 3106 (1998). The transmitted and reflected hues are each determined in terms of values a* and b* of the CIE L*a*b* color space by a method according to JIS Z 8781-4.

### (Haze Value)

In the present specification, the "haze value" refers to a value measured with a haze meter (manufactured as "HZ-V3" by Suga Test Instruments Co., Ltd.) by a method according to JIS K 7136 (2000).

### (Geometric Thickness)

The geometric thickness has the same meaning as the commonly used term "thickness" and simply refers to a thickness of a layer or film. The geometric thickness of a layer or film can be determined on the basis of a film formation rate calculated from the product of the transfer speed of a substrate and the thickness of a single film layer formed under the same film formation condition as that of the low radiation film sheet.

### (Refractive Index)

In the present specification, the "refractive index" refers to a value measured at a wavelength of 550 nm. The refractive index can be determined by forming a single film layer under the same conditions as that of the low radiation film sheet, measuring the visible light transmittance and visible light reflectance (film surface side) of the resulting single film layer with an automatic recording spectrophotometer (manufactured as "U-4000" by Hitachi, Ltd.) and performing optical simulation (Reflectance-transmittance method) on the measured values.

### (Optical Thickness)

The "optical thickness" refers to a value expressed by the product of the geometric thickness and the refractive index. The optical thickness can be determined based on the refractive index at 550 nm and thickness of a single film layer formed under the same film formation condition as that of the low radiation film sheet.

### (Low Radiation Film Sheet)

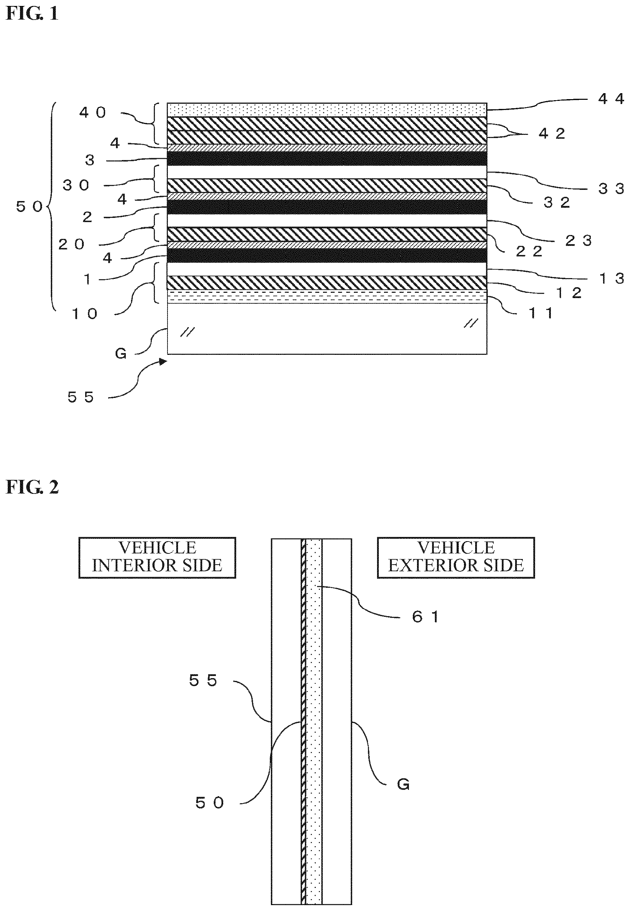

In the present specification, the "low radiation film sheet" refers to the whole of films on a transparent substrate. The "film" refers to one obtained by laminating one or more layers. The "layer" refers to a minimum unit divided by boundaries. The layer may be composed of one component or a plurality of components. The distribution of the each component in the layer may be uniform or nonuniform. Further, the wording "on" of "on the transparent substrate" etc. means that it may be in contact with the transparent substrate or be disposed over the transparent substrate with any optional film or layer interposed therebetween. On the other hand, the wordings "directly above" and "directly below" mean that it is in contact with the lamination target film or layer without any optional film or layer being interposed therebetween. In the solar radiation shielding member shown in e.g. FIG. 1, the glass plate G side may be referred to as "lower" side; and the protective layer 44 side may be referred to as "upper" side. Any of layers located at the top of the film, such as a crystalline dielectric layer 12 of a first dielectric film 10 or a protective layer 44 of a fourth dielectric film 44 in FIG. 1, may be referred to as "top layer".

### (Processed Glass)

In the present specification, the "processed glass" refers to a glass which has been processed through a heating step. Examples of the processed glass are a laminated glass, a bent glass, a tempered glass and the like. There is no particular limitation on the temperature of the heating step. In the case of the laminated glass, the heating step is performed at about 90 to 150°C. In the case of the bent glass or tempered glass, the heating step is performed at about 550 to 720°C. In the case where the solar radiation shielding member is processed through a heating step, the thus-processed solar radiation shielding member is also referred to as the processed glass. In this case, a glass plate is used as the transparent substrate of the solar radiation shielding member.

### (Heat Resistance)

In the present specification, the "heat resistance" refers to resistance of the low radiation film sheet to heat. As discussed in Examples of the present specification, it can be said that the low radiation film sheet has heat resistance when the solar radiation shielding member with the low radiation film sheet after subjected to heating for 7 minutes at 690 to 700°C shows a haze value of 1.5% or lower with no defect found in the low radiation film sheet by visual appearance check. The haze value may preferably be set to 1.0% or lower, more preferably 0.5% or lower.

### (Zn Dielectrics)

In the present specification, Sn-doped ZnO is referred to as "ZnSnO". As Zn is a metal atom easy to arrange in a crystal array. An oxide of Zn, that is, ZnO thus forms a crystalline dielectric layer. On the other hand, ZnSnO in which ZnO is doped with Sn has a higher rate of dense amorphous state with increase in the doping amount of Sn and forms an amorphous dielectric layer as a whole. For this reason, "ZnSnO" refers to an amorphous dielectric in the present specification. In order to obtain amorphous ZnSnO, the doping amount of Sn needs to be increased. For example, amorphous ZnSnO can be obtained by a sputtering film formation method using a ZnSn target with a Zn:Sn ratio (weight ratio) of 40:60 to 80:20 and oxygen gas as a reactive gas. The thus-obtained dielectric material is assumed to have a composition of (ZnO)ₓ(SnO₂)₁₋ₓ (where 0 < x < 1), but is simply referred to as ZnSnO in the present specification.

Further, Al-doped ZnO is referred to as "ZnAlO" in the present specification. ZnAlO is a crystalline dielectric containing 1 to 5 wt% of Al based on the total amount of the dielectric. The content of aluminum in the dielectric is at a level that does not exert an influence on the component ratio of the dielectric. The component ratio of ZnAlO is assumed as approximately Zn:O = 1:1.

### (Si Dielectrics)

In the present specification, Al-doped Si₃N₄ is referred to as "SiAIN". Si₃N₄ is an amorphous dielectric; and SiAlN in which Si₃N₄ is doped with Al is also an amorphous dielectric. For example, SiAlN can be obtained by a sputtering film formation method using a Si target doped with 1 to 15 wt% Al and nitrogen gas as a reactive gas. SiAlN is a dielectric containing 1 to 10 wt% of Al based on the total amount of the dielectric. The content of aluminum in the dielectric is at a level that does not exert an influence on the component ratio of the dielectric. This dielectric material is thus simply referred to as SiAlN in the present specification although the component ratio of SiAlN is assumed as approximately Si:N = 3:4.

Further, Al-doped SiO₂ is referred to as "SiAlO" in the present specification. SiO2 is an amorphous dielectric; and SiAlO in which SiO₂ is doped with Al is also an amorphous dielectric. For example, SiAlO can be obtained by a sputtering film formation method using a Si target doped with 1 to 15 wt% Al and oxygen gas etc. as a reactive gas. SiAlN is a dielectric containing 1 to 10 wt% of Al based on the total amount of the dielectric. The content of aluminum in the dielectric is at a level that does not exert an influence on the component ratio of the dielectric. This dielectric material is thus simply referred to as SiAlO in the present specification although the component ratio of SiAlO is assumed as approximately Si:O = 1:2.

In the present specification, a Si oxynitride is referred to as "SiON". SiON is an amorphous dielectric. For example, SiON can be obtained by a sputtering film formation method using a Si target and a mixed gas oxygen and nitrogen as a reactive gas. The component ratio Si:O:N of the thus-obtained oxynitride can be set as appropriate depending on the desired refractive index. The refractive index of oxynitride is in the range between the refractive index of oxide and the refractive index of nitride according to the mixed ratio of the reactive gas. Since the refractive index of SiO₂ is about 1.46; and the refractive index of Si₃N₄ is about 2.03, the oxynitride has a refractive index ranging from 1.53 to 2.03 according to the mixed ratio of the reactive gas.

In the present specification, a Al-doped Si oxynitride is referred to as "SiAlON". SiAlON is an amorphous dielectric containing 1 to 10 wt% of Al based on the total amount of the dielectric. For example, SiAlON can be obtained by a sputtering film formation method using a Si target doped with 1 to 10 wt% Al and a mixed gas of oxygen and nitrogen as a reactive gas. The component ratio Si:O:N of the thus-obtained oxynitride can be set as appropriate depending on the desired refractive index. The refractive index of oxynitride is in the range between the refractive index of oxide and the refractive index of nitride according to the mixed ratio of the reactive gas. As shown in Examples of the present specification, SiAlON, when formed using a Si target doped with 10 wt% Al and a mixed gas of O₂:N₂ (volume ratio) = 1:7, has a refractive index of 1.82. The corresponding oxide (SiAlO) and nitride (SiAIN), when each formed using a target similar to the above, have a refractive index 1.53 and 2.03, respectively.

### 2. Solar Radiation Shielding Member

A solar radiation shielding member according to one aspect of the present invention includes a low radiation film sheet in which a first dielectric film, a first metal film, a second dielectric film, a second metal film, a third dielectric film, a third metal film and a fourth dielectric film are laminated together in this order on a transparent substrate, characterized in that: the first dielectric film has a dielectric layer A arranged directly above the transparent substrate and containing silicon and nitrogen and a dielectric layer B arranged on the dielectric layer A and containing titanium and oxygen; the dielectric layer A has an optical thickness of 12 to 86 nm; the first, second and third dielectric films respectively have crystalline dielectric layers as top layers thereof; the crystalline dielectric layers each have an optical thickness of 5 to 54 nm; and the first, second and metal films are Ag films directly below which the crystalline dielectric layers are arranged, respectively.

The solar radiation shielding member according to one embodiment of the present invention will be described below with reference to FIG. 1. It should be understood that the present invention is not limited to the embodiment of FIG. 1.

### (Solar Radiation Shielding Member 55)

The solar radiation shielding member 55 has a structure in which the low radiation film sheet 50 with the first to fourth dielectric films 10 to 50 is arranged on the transparent substrate. The low radiation film sheet 50 is improved in heat resistance so that the solar radiation shielding member can be processed into a processed glass through heating treatment.

The solar radiation shielding member 55 according to the embodiment of the present invention is usable as window materials for buildings and vehicles and is particularly suitable for use as window glasses for buildings and vehicles. In the case of using the solar radiation shielding member 55 as a window glass for a building, the solar radiation shielding member 55 can be fixed as a simple plate glass in a window frame or can be utilized as a component of a laminated glass. In the case of using the solar radiation shielding member 55 as a window glass for a vehicle, the solar radiation shielding member 55 can be utilized as a door glass, roof glass, rear glass or the like without the need for bending, lamination and tempering.

### (Transparent Substrate)

The transparent substrate is a plate-shaped substrate on which the low radiation film sheet 50 is arranged. In the present specification, the transparent substrate may refer to a substrate having a visible light transmittance of 80% or higher at a thickness of 2 mm. In the embodiment of FIG. 1, a glass plate G is used as the transparent substrate. The transparent substrate is however not limited to the glass plate. There is no particular limitation on the kind of the glass plate G. The glass plate G can be a general-purpose float plate glass, a colored glass, a chemically tempered glass, an air-cooled tempered glass or the like.

### (Metal Films)

The metal films are Ag films, and are referred to as first, second and third metal films 1, 2 and 3 in order from the side of the transparent substrate. It is preferable that the sum of the geometric thicknesses of the metal films is 30 to 50 nm in order to achieve good solar radiation shielding performance. Even when the sum of the geometric thicknesses of the metal films, good solar radiation shielding performance is obtained. In this case, however, the reflected hue tends to be reddish when viewed obliquely. When the sum of the geometric thicknesses of the metal films is smaller than 30 nm, the solar radiation shielding performance tends to be insufficient.

In order to improve the visible light transmittance without impairment of the solar radiation shielding performance, it is preferable that the second metal film 2 is made the thickest such that the ratio of the thickness of the second metal film 2 relative to the thickness of the other metal film is in the range of 1.01 to 1.55. When the ratio of the thickness of the second metal film 2 relative to the thickness of the other metal film is lower than 1.01 or higher than 1.55, the visible light transmittance may become insufficient.

Each of the metal films is formed as a metal film containing 90 to 100 wt% of Ag. Since the Ag films are easily deteriorated by the influence of heat, oxygen or the like, any of Pd, Au, Pt, Ti, Al, Cu, Cr, Mo, Nb, Nd, Bi and Ni may be contained in the metal films for improvements of heat resistance and chemical resistance.

In the present embodiment, the first metal film 1, the second metal film 2 and the third metal film 3 are arranged directly above the first dielectric film 10, the second dielectric film 20 and the third dielectric film 30, respectively. As will be explained later the dielectric films 10, 20 and 30 have respective crystalline dielectric layers 13, 23 and 33 as top layers thereof. In other words, the Ag films are arranged respectively directly above these crystalline dielectric layers 13, 23 and 33. With such arrangement, the crystallinity of the Ag films is improved. Deterioration of the Ag films, such as aggregation of Ag, occurring during heating may result from minute defects originally present in the Ag films. The heat resistance is thus improved by improving the crystallinity of the Ag films.

### (Sacrificial Metal Film)

It is preferable to provide sacrificial metal films 4 directly above the respective metal films. When the dielectric films 20, 30 and 40 are respectively formed on exposed surfaces of the metal films, the metal films may be deteriorated by oxygen etc. In view of this, the sacrificial metal films 4 are intended to protect the metal films during the formation of the dielectric films on the metal films. It is preferable that the sacrificial metal films 4 are made of a material which would not be significantly deteriorated during heating. Preferably, the sacrificial metal films 4 contain at least one selected from the group consisting of Ti, NiCr, Nb and stainless steel. Further, the sacrificial metal films 4 are preferably of the type which finally becomes transparent by oxidation or nitridation such that the visible light transmittance would not be impaired more than necessary. In the present specification, the "stainless steel" is a kind of steel containing Fe, Cr and Ni and is also referred to as "SUS". The contents of the respective three components can be set as appropriate. For example, the stainless steel may be of the kind having a Fe content of 50 to 80 wt%, a Cr content of 10 to 25 wt% and a Ni content of 0 to 20 wt%.

There is no particular limitation on the thickness of the sacrificial metal films 4. In general, the sacrificial metal films 4 has a geometric thickness of about 1 to 5 nm. Although another film may be interposed between the sacrificial metal film 4 and the dielectric film located thereon, it is preferable that the second, third and fourth dielectric films 20, 30 and 40 are arranged directly above the respective sacrificial metal films 4.

### (First Dielectric Film 10)

The first dielectric film 10 is arranged directly above the transparent substrate. More specifically, the first dielectric film 10 has: a dielectric layer A 11 arranged directly above the transparent substrate and containing silicon and nitrogen; a dielectric layer B 12 arranged on the dielectric layer A and containing titanium and oxygen; and a crystalline dielectric layer 13 arranged as a top layer. There is no particular limitation on the thickness of the first dielectric film 10. It is however preferable that the first dielectric film 10 has e.g. an optical thickness of 57 to 126 nm.

In the first dielectric film 10, any optional layer may be interposed between the dielectric layer A 11 and the dielectric layer B 12 or between the dielectric layer B 12 and the crystalline dielectric layer 13. As a result of researches made by the present inventors, it has been found that the heat resistance is largely deteriorated when a dielectric layer containing Si and N, which is similar to the dielectric layer A11, is provided directly above the dielectric layer B12. It is thus preferable that a dielectric layer containing Si and N is not provided directly above the dielectric layer B 12.

### (Dielectric Layer A 11)

The dielectric layer A 11 is formed as a layer of dielectric containing silicon and nitrogen on a surface of the transparent substrate. In the case where the glass plate G is used as the transparent substrate, the dielectric layer A 11 functions as a passivation layer for the glass plate G. There is a problem that deterioration of Ag occurs when alkali metal etc. diffuses from the glass plate G into the dielectric film under a heating environment and reaches the metal film. When the dielectric layer A 11 is arranged directly above the glass plate G, however, it is possible to suppress deterioration of Ag even under heating at 690 to 700°C as shown in Examples of the present specification. As the material of the dielectric layer A 11, it is preferable to use a silicon-containing nitride or a silicon-containing oxynirtide. Preferred examples of the material of the dielectric layer A11 are Si₃N₄, SiAlN, SiON, SiAlON and the like.

The dielectric layer A11 has an optical thickness 12 to 86 nm. It has been found as a result of researches made by the present inventors that, when the optical thickness of the dielectric layer A11 is smaller than 12 nm or larger than 86 nm, the haze and surface resistance values become high after heating at about 690 to 700°C. Further, the diffusion of alkali metal etc. from the transparent substrate cannot be sufficiently suppressed when the optical thickness of the dielectric layer A11 is smaller than 12 nm. When the optical thickness of the dielectric layer A11 is larger than 86 nm, cracking becomes likely to occur with increase in the internal stress of the layer itself or the thermal stress exerted on the layer during firing. Due to such cracking, the dielectric layer A11 fails to function as the passivation layer so that there may occur deterioration of the Ag films or haze in the dielectric layer A11 itself. The dielectric layer A11 may preferably have an optical thickness of 16 to 82 nm, more preferably 18 to 72 nm.

### (Dielectric Layer B 12)

The dielectric layer B 12 is formed as a layer of dielectric containing titanium and oxygen, and performs the function of improvement of the heat resistance. It is preferable to use TiO₂ as the material of the dielectric layer B 12. A Ti oxide doped with 0.1 to 30 wt% of Si, Al, Zn, In, Sn, Nb, Zr or Ta may alternatively be used as the material of the dielectric layer B 12.

It is preferable that the dielectric layer B 12 has an optical thickness of 2 to 100 nm. When the optical thickness of the dielectric layer B 12 is smaller than 2 nm, the heat resistance improvement function tends to be insufficient. When the optical thickness of the dielectric layer B 12 is larger than 100 nm, the haze value may be lowered after heating. More preferably, the dielectric layer B12 may have an optical thickness of 12 to 62 nm.

### (Crystalline Dielectric Layer 13)

The crystalline dielectric layer 13 functions to promote the crystal growth of Ag during the formation of the Ag film as the first metal film 1. With the crystal growth of Ag, various optical properties are further improved. Since the Ag film of high crystallinity has less defects which become a cause of deterioration during firing, the heat resistance is easily improved with the crystal growth of Ag.

As the material of the crystalline dielectric layer 12, there can be used a Zn-containing dielectric such as Zn oxide. The Zn oxide dielectric may be of the kind containing 1 to 5 wt% of Al, In, Sn and Ga based on the total amount of the dielectric. The crystalline dielectric layer 13 has an optical thickness of 5 to 54 nm. When the optical thickness of the crystalline dielectric layer 13 is smaller than 5 nm, the Ag crystal growth function tends to be insufficient. When the optical thickness of the crystalline dielectric layer 13 is larger than 54 nm, there may exist a crystal grain boundary in the crystalline dielectric layer 13. Since the crystal grain boundary allows various gas and water to enter therethrough and thereby cause deterioration of the first metal film 1, the existence of the crystal grain boundary becomes a cause of occurrence of defects and aggregation during heating.

### (Second and Third Dielectric films 20 and 30)

The second dielectric film 20 is formed on the first metal film 1, and mainly exerts an influence on the visible light transmittance, reflectivity, reflected hue and the like. There is no particular limitation on the thickness of the second dielectric film 20. The thickness of the second dielectric film 20 can be selected as appropriate according to desired optical properties. It is preferable that the second dielectric film 20 has e.g. an optical thickness of 144 to 190 nm.

The third dielectric film 30 is formed on the second metal film 2. Similarly to the second dielectric film 20, the third dielectric film 30 exerts an influence on the visible light transmittance, reflectivity, reflected hue and the like. There is also no particular limitation on the thickness of the third dielectric film 30. The thickness of the third dielectric film 30 can be selected as appropriate according to desired optical properties. It is preferable that the third dielectric film 30 has e.g. an optical thickness of 136 to 182 nm.

As in the case of the first dielectric film 10, the second and third dielectric films 20 and 30 have respective crystalline dielectric layers 23 and 33 arranged as top layers. The crystalline dielectric layers 23 and 33 can be formed of the same kind of dielectric as that of the above-mentioned crystalline dielectric layer 13 of the first dielectric film 10. The crystalline dielectric layers 23 and 33 each also have an optical thickness of 5 to 54 nm.

Each of the second and third dielectric films 20 and 30 may have, in addition to the crystalline dielectric layer 22, 23, any other dielectric layer of different refractive index from the respective metal films. There is no particular limitation on the kind of the other dielectric layer. For example, there can be used a dielectric layer of Zn doped with Al, Sn or Ga etc., In₂O₃, In₂O₃ doped with Sn or Zn etc., TiO₂ or the like with a refractive index of around 2.0. In particular, ZnSnO is suitably usable because it is known to form a dense film structure and has high barrier performance to gas and water which becomes a cause of deterioration of the metal film.

### (Fourth Dielectric Film 40)

The fourth dielectric film 40 is formed on the third metal film 3, and mainly exerts an influence on the heat resistance, transmitted and reflected hues and the like. As in the case of the second dielectric film 20, the fourth dielectric film 40 can be formed using a dielectric of different refractive index the respective metal films. There is no particular limitation on the kind of the dielectric used. Further, there is no particular limitation on the thickness of the fourth dielectric film 40. The thickness of the fourth dielectric film 40 can be selected as appropriate according to desired optical properties. It is preferable that the fourth dielectric film 40 has e.g. an optical thickness of 38 to 123 nm.

It is preferable that the fourth dielectric film 40 has two or more layers including a dielectric layer containing titanium and oxygen and an amorphous dielectric layer containing zinc and oxygen. The dielectric layer containing titanium and oxygen favorably functions to improve the mechanical durability and heat resistance of the low radiation film sheet 50 and to increase the visible light transmittance by the anti-reflective effect. The amorphous dielectric layer containing zinc and oxygen has a dense structure to prevent the diffusion of oxygen to the underlying metal film, and thereby performs the function of improvement of the heat resistance. It is preferable that the dielectric layer containing titanium and oxygen is located on the amorphous dielectric layer.

As the material of the dielectric layer containing titanium and oxygen, there can be used TiO₂. There is no particular limitation on the thickness of the dielectric layer containing titanium and oxygen. The dielectric layer containing titanium and oxygen may have e.g. an optical thickness of 2 to 100 nm. As the material of the amorphous dielectric layer containing silicon and oxygen, there can be used ZnSnO. There is no particular limitation on the thickness of the amorphous dielectric layer containing silicon and oxygen. The amorphous dielectric layer containing silicon and oxygen may have e.g. an optical thickness of 20 to 102 nm.

The fourth dielectric film 40 is located at the top of the low radiation film sheet 50, and preferably has a protective layer 44 at a top layer thereof. The protective layer 44 functions to prevent the entry of oxygen from the surface of the low radiation film sheet 50 and thereby suppress deterioration of the metal films inside the low radiation film sheet. For example, a dielectric layer of HO₂, SiO₂, SiAlO etc. can be used as the protective layer 44.

### 3. Production Process of Solar Radiation Shielding Member

In the present invention, it is feasible to form the low radiation film sheet 50 of the solar radiation shielding member by a sputtering method, an electron beam deposition method, an ion plating method or the like. The sputtering method is suitable for ease of ensuring productivity and uniformity. Hereinafter, an explanation will be given of the production process using the sputtering method. The present invention is however not limited to the following production process.

The formation of the low radiation film sheet 50 by sputtering is carried out while transferring the transparent substrate in a device in which each of sputtering targets as the materials of the respective films is placed. The device includes therein a vacuum chamber for film formation. The sputtering is conducted by introducing a sputtering atmosphere gas is introduced into the vacuum chamber, with the target placed within the vacuum chamber, and generating a plasma in the device with the application of a negative potential to the target.

The method for controlling the film thickness to a desired value is varied depending on the type of the sputtering device and thus is not particularly limited. For desired film thickness control, the method widely used is to change the formation rate of the film layer by adjusting the power input to the target and the conditions of the introduced gas, or to adjust the transfer speed of the substrate.

In the case of forming the dielectric films 10, 20, 30 and 40, either a ceramic target or a metal target can be used as the target. In either case, there is no particular limitation on the gas conditions of the atmosphere gas. Depending on the sputtering target layer, gas species can be appropriately selected from Ar gas, O₂ gas, N₂ gas etc. and mixed at an appropriate mixing. The gas introduced into the vacuum chamber may contain any arbitrary component other than Ar gas, O₂ gas and N₂ gas.

In the case of forming the metal films 1, 2 and 3, an Ag target or Ag alloy target is used as the target. It is preferable to introduce Ar gas as the atmosphere gas. A different kind of gas may be mixed in the atmosphere gas within the range that does not impair optical properties of Ag.

In the case of forming the sacrificial metal films 4, the target used can be selected as appropriate. The atmosphere gas introduced can be an inert gas such as Ar or the like.

As the plasma generation source, there can be used a direct current (DC) power supply an alternating current (AC) power supply, a direct current-alternating current superposed power supply. It is preferable to use a DC pulse power supply which is a direct current power supply is equipped with a pulse function, or an alternating current power supply, in the case where an abnormal discharge such as arcing is likely to occur at the time of formation of the dielectric film layer.

### 4. Preferred Embodiments

The solar radiation shielding member 55 is advantageous in that, even when the solar radiation shielding member 55 undergoes a heating step, it is possible to suppress significant deterioration of the Ag films inside the low radiation film sheet 50. The solar radiation shielding member 55 is thus suitably applicable to processed glasses such as laminated glass, bent glass and tempered glass. Since the solar radiation shielding member shows a visible light transmittance of 70% or higher even after the heating step, it is considered that the visibility of the obtained processed glass would not be impaired by the solar radiation shielding member. Preferred embodiments of the present invention will be now described below. In the description of the preferred embodiments, the contents overlapping the above sections "1. Explanation of Terms" to "3. Production Process of Solar Radiation Shielding Member" will be omitted herefrom.

One preferred embodiment of the present invention is a processed glass obtained by processing a plate glass through a heating step, wherein the solar radiation shielding member 55 is used as the plate glass. The processed glass can be a tempered glass, a bent glass, a laminated glass or the like as mentioned above. As mentioned above, the solar radiation shielding member 55 has the low radiation film sheet 50 in which the first dielectric film 10, the first metal film 1, the second dielectric film 20, the second metal film 2, the third dielectric film 30, the third metal film 3 and the forth dielectric film 40 laminated in this order on the transparent substrate. In the first dielectric film 10, the dielectric layer A11 containing silicon and nitrogen is arranged directly above the transparent substrate; and the dielectric layer B12 containing titanium and oxygen is arranged on the dielectric layer A11 and. The dielectric layer A11 has an optical thickness of 12 to 86 nm. The first, second and third dielectric films 10, 20 and 30 have respective crystalline dielectric layers 23 as their top layers. The crystalline dielectric layers 23 have an optical thickness of 5 to 54 nm. The first, second and third metal films 1, 2 and 3 are Ag films directly below which the crystalline dielectric layers 23 are arranged, respectively. In the present embodiment, a glass plate G is used as the transparent substrate of the solar radiation shielding member 55.

The above processed glass is usable as window materials for buildings and vehicles as in the case of the solar radiation shielding member 55. For use a window glass for a building, the laminated glass or tempered glass can be fixed in a window frame. The processed glass can be utilized as a component of a laminated glass. For use as a window glass for a vehicle, the tempered glass or bent glass can be utilized as a vehicle door glass, roof glass, rear glass or the like. The laminated glass is usable not only as the vehicle window glass but also as a window shield.

In the production of the processed glass, the heating temperature can be set as appropriate depending on the target processed glass. More specifically, it is feasible to produce various kinds of processed glasses by heating the solar radiation shielding member 55 with a known heating unit such as heating furnace, autoclave etc., followed by slow cooling or rapid cooling.

In the case where the processed glass is a tempered glass, the tempered glass can be obtained by performing tempering treatment such as air-cooling tempering, chemical tempering etc. on the solar radiation shielding member 55.

In the case where the processed glass is a bent glass, the bent glass can be obtained by heating the solar radiation shielding member 55 with e.g. a heating furnace to about a softening point of 550°C to 700°C and performing bending work such as self-weight bending, press bending etc. on the solar radiation shielding member 55.

In the low radiation film sheet 50 of the solar radiation shielding member 55 of the above processed glass, it is preferable that: the first dielectric film 10 has an optical thickness of 88 to 120 nm; the second dielectric film 20 has an optical thickness of 164 to 190 nm; the third dielectric film 30 has an optical thickness of 145 to 182 nm; and the fourth dielectric film 40 has an optical thickness of 100 to 123 nm. When the thicknesses of the respective dielectric films are in the above preferable ranges, the solar radiation shielding member 55 achieves the following features under the condition that the glass plate G is 2 mm in thickness: the values a* and b* determined for transmitted and reflected lights in accordance with the CIE L*a*b* color space are each less than or equal to 10 in absolute value; and the haze value after firing is 0.5% or lower.

Another preferred embodiment of the present invention is a laminated glass obtained by laminating two or more plate glasses together via an intermediate resin film, wherein the solar radiation shielding member 55 is used as at least one of the plate glasses. As mentioned above, the solar radiation shielding member 55 has the low radiation film sheet 50 in which the first dielectric film 10, the first metal film 1, the second dielectric film 20, the second metal film 2, the third dielectric film 30, the third metal film 3 and the forth dielectric film 40 laminated in this order on the transparent substrate. In the first dielectric film 10, the dielectric layer A11 containing silicon and nitrogen is arranged directly above the transparent substrate; and the dielectric layer B12 containing titanium and oxygen is arranged on the dielectric layer A11 and. The dielectric layer A11 has an optical thickness of 12 to 86 nm. The first, second and third dielectric films 10, 20 and 30 have respective crystalline dielectric layers 23 as their top layers. The crystalline dielectric layers 23 have an optical thickness of 5 to 54 nm. The first, second and third metal films 1, 2 and 3 are Ag films directly below which the crystalline dielectric layers 23 are arranged, respectively. The solar radiation shielding member 55 may be in tempered glass form or bent glass form as mentioned above. A commonly used PVB or EVA film is preferably applicable as the resin intermediate film.

In the case of producing the laminated glass using the solar radiation shielding member 55, it is preferable to perform heating and pressing treatment with an autoclave. There is no particular limitation on the production process of the laminated glass. The heating and pressing treatment may be performed at a heating temperature of 90 to 150°C under a pressure condition of 1.03×10⁶ Pa/m² to 1.27×10⁶ Pa/m².

In the low radiation film sheet 50 of the solar radiation shielding member 55 of the above laminated glass, it is preferable that: the first dielectric film 10 has an optical thickness of 57 to 115 nm; the second dielectric film 20 has an optical thickness of 144 to 182 nm; the third dielectric film 30 has an optical thickness of 136 to 182 nm; and the fourth dielectric film 40 has an optical thickness of 38 to 123 nm. When the thicknesses of the respective dielectric films are in the above preferable ranges, the solar radiation shielding member 55 achieves the following feature under the condition that the glass plate G of 50 is 2 mm in thickness: the values a* and b* of transmitted and reflected lights in accordance with the CIE L*a*b* color space are each less than or equal to 10 in absolute value. More preferably, the first dielectric film 10 may have an optical thickness of 57 to 100 nm; the third dielectric film 30 may have an optical thickness of 140 to 170 nm; and the fourth dielectric film 40 may have an optical thickness of 60 to 123 nm. When the thicknesses of the respective dielectric films are in the above more preferable ranges, the solar radiation shielding member 55 achieves the following feature under the condition that the glass plate G of 50 is 2 mm in thickness: the values a* and b* of transmitted and reflected lights in accordance with the CIE L*a*b* color space are in a range more than or equal to -10 and less than 1 and in a range more than or equal to -10 and less than or equal to 5, respectively.

### Examples

### 1: Formation of Low Radiation Film Sheets

An explanation of Examples and Comparative Examples will be given below. The compositions of low radiation film sheets of Examples and Comparative Examples are shown in TABLE 1. Herein, the terms "ZnSnO-30" and "ZnSnO-50" refer to amorphous dielectrics obtained by a sputtering film formation method using Zn targets doped with 30 wt% and 50wt% of Sn, respectively, and oxygen gas as a reactive gas. In each example, the respective films are formed by means of a magnetron sputtering device on a soda lime glass plate of 2 mm thickness. Although not shown in the table, sacrificial metal films of Ti with a geometric thickness of 2.8 nm were formed directly above the respective metal films in Examples 1 to 24 and Comparative Examples 1 to 8; and a sacrificial metal film of Ti with a geometric thickness of 2.8 nm was formed directly above the metal film in Comparative Example 9.

The thicknesses of the respective films were controlled to desired values by adjusting the transfer speed of the glass plate. As the transfer speed, used was a value previously determined for each kind of film by forming a single layer film. In any of Examples and Comparative Examples, the glass plate and films were not specifically subjected to heating except for the case where the temperature of the glass plate and films was raised as a result of sputtering at the time of film formation.

More specifically, the glass plate G was first held by a substrate holder in a vacuum chamber of the sputtering device. Further, a target was placed in the vacuum chamber. On the back side of the target, a magnet was arranged. The vacuum chamber was evacuated by a vacuum pump.

The dielectric films and the metal films are formed one by one on the glass plate G under the conditions shown in TABLE 2. The sputtering target was supplied with power from a DC power supply or DC pulse power supply through a power cable. At this time, the pressure inside the vacuum chamber was controlled as shown in TABLE 2 by feeding argon gas, oxygen gas and nitrogen gas into the vacuum chamber while continuously operating the vacuum pump. The pressure was measured with a diaphragm gauge.

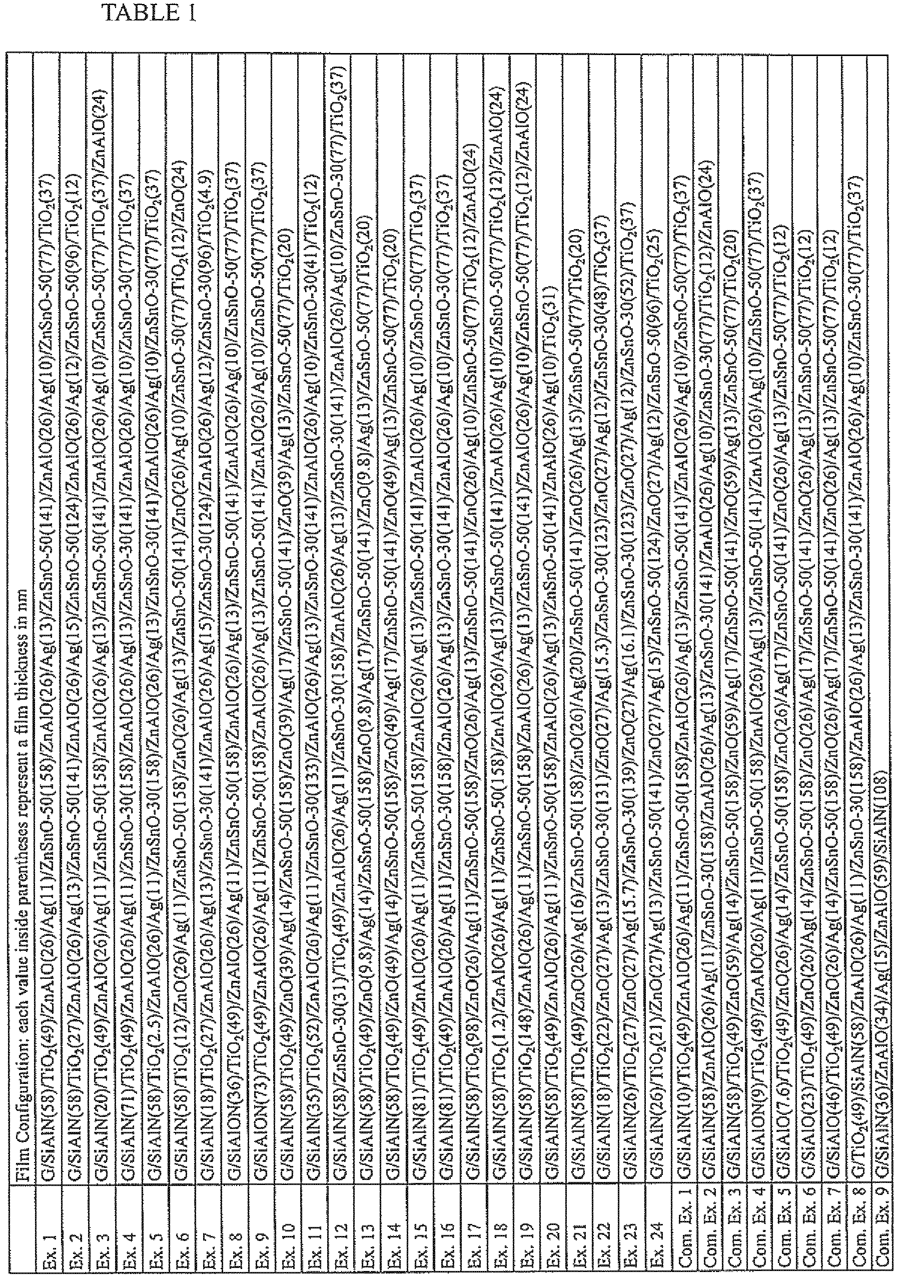

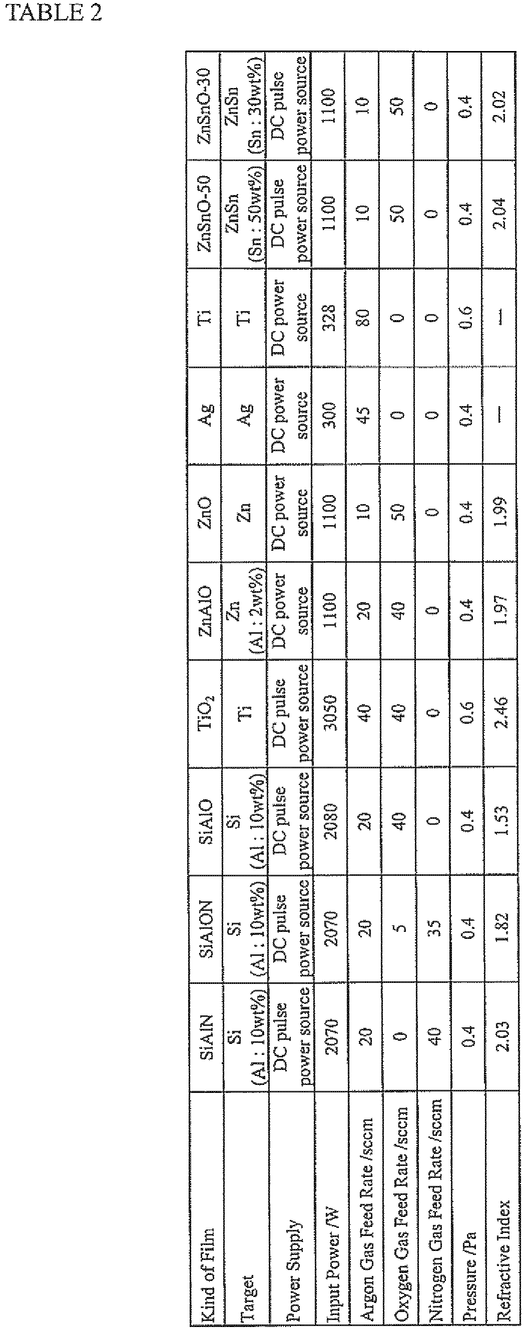

### 2: Various Evaluation Tests

Each of the solar radiation shielding members obtained in the above Examples and Comparative Examples was placed in a muffle furnace of 700°C, taken out of the muffle furnace after the lapse of 7 minutes, and then, gradually cooled down to room temperature in the air. The low radiation film sheets of the respective solar radiation shielding members were evaluated by the following methods. The evaluation results are shown in TABLE 3.

### (Heat Resistance)

The hase value of the low radiation film sheet was measured with a haze meter (manufactured as "HZ-V3" by Suga Test Instruments Co., Ltd.) by a method according to JIS K 7136 (2000). Further, the film surface appearance of the low radiation film sheet was visually checked. In TABLE 3, the appearance evaluation results are indicated as: " × " when particular or linear defects were visually seen or white haze defects were seen on the film surface; "○" when lightly haze defects were seen by irradiation with visible light even though particular or linear defects were not seen; and "⊚" when any of the above-mentioned defects was not observed.

### (Optical Properties)

The visible light transmittance of the solar radiation shielding member was measured by a method according to JIS R 3106 (1998). Furthermore, the values a* and b* of the CIE L*a*b* color space were measured for transmitted light and reflected light (film surface side reflection and glass plate side reflection) from the solar radiation shielding member by a method according to JIS Z 8781-4. As for the solar radiation shielding member of Example 17, the measurement of the visible light transmittance and the values a* and b* was not performed.

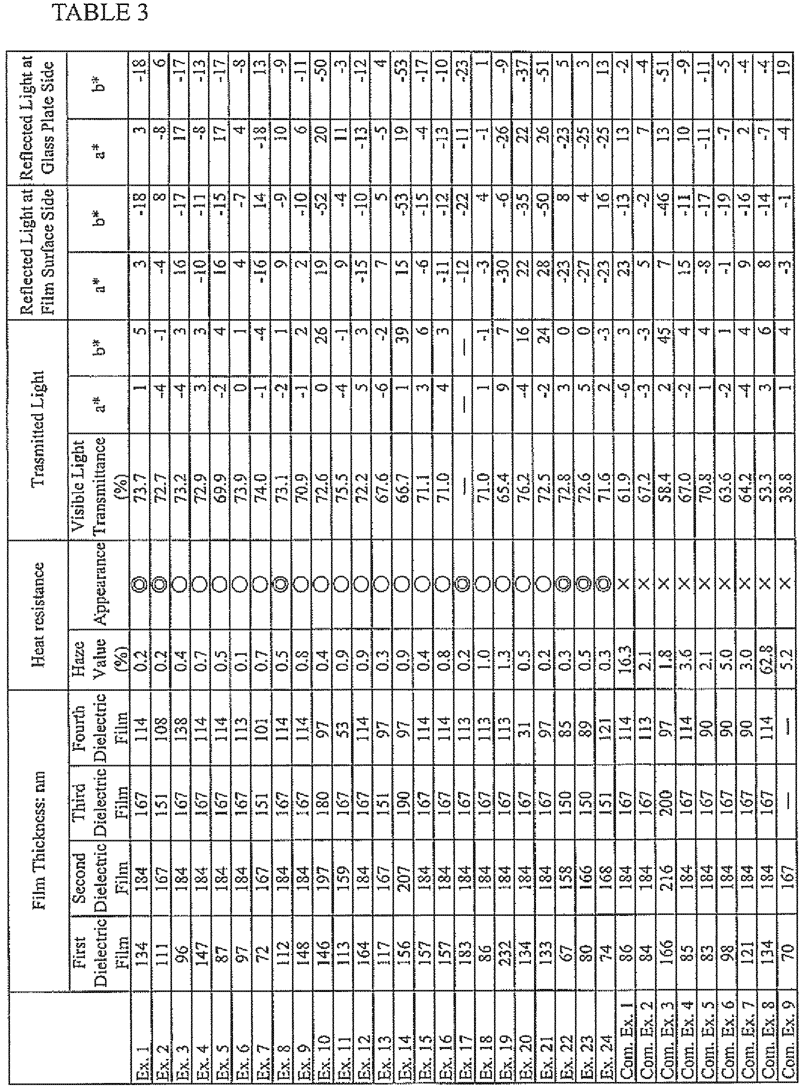

As shown above, the low radiation film sheet of each Example had a haze value 1.5% or lower after heating at 700°C without significant appearance deterioration. In Examples 2, 6, 8 and 13, the transmitted and reflected hues (a* and b*) of the low radiation film sheet after the heating was 10 or less in absolute value; and the haze value of the low radiation film sheet after the heating at 700°C was 0.5% or lower. Thus, the low radiation film sheets of these Examples achieved both good heat resistance suppression of excessive color tone.

On the other hand, the low radiation film sheet of each Comparative Example was high in haze value and inferior in appearance quality. In Comparative Examples 1 and 4, the thickness of the dielectric layer A was out of the claimed range. In Comparative Example 2, no dielectric layer B was provided. In Comparative Example 3, the thickness of the crystalline dielectric layer was out of the claimed range. In Comparative Examples 5 to 7, the SiAlO layer was used in place of the dielectric layer A. In Comparative Example 8, the order of lamination of the dielectric layer A and the dielectric layer B was changed. In Comparative Example 9, the solar radiation film sheet was produced in the form of a simple laminate using the top layer of SiAIN and tested for its heat resistance. It is apparent from the results of Comparative Example 9 that the low radiation film sheet cannot achieve a required level of heat resistance just by using the top and bottom layers of SiAlN.

### 3: Production and Evaluation of Laminated Glasses

Laminated glasses shown in FIG. 2 were respectively produced using the solar radiation shielding members obtained in Examples 1 to 20 and 22 to 24 and Comparative Examples 1 to 9, PVB films of 0.76 mm thickness and soda lime glass plates of 2 mm thickness.

More specifically, the solar radiation shielding member 55, the PVB film 61 and the soda lime glass plate G were laminated in this order. The resulting laminate was degassed. Herein, the lamination was conducted such that the low radiation film sheet 50 of the solar radiation shielding member 55 was brought into contact with the PVB film 61. The degassed laminate was placed in an autoclave, and then, subjected to heating and pressing treatment by setting the temperature of the autoclave to 130°C and setting the pressure of the autoclave to 1.2×10⁶ Pa/m². With this, the laminated glass was obtained.

For evaluation of the above-obtained laminated glass, the values a* and b* were measured for transmitted and reflected lights by the same method as mentioned above. In Comparative Examples 2, 4 and 8, the evaluation was not performed because there occurred cracking during the production of the laminated glass. The evaluation results are shown in TABLE 4. In TABLE 4, the term "reflected light at vehicle exterior side" refers to reflection at the side of the soda lime glass plate G; and the term "reflected light at vehicle interior side" refers to reflection at the side of the solar radiation shielding member 55.

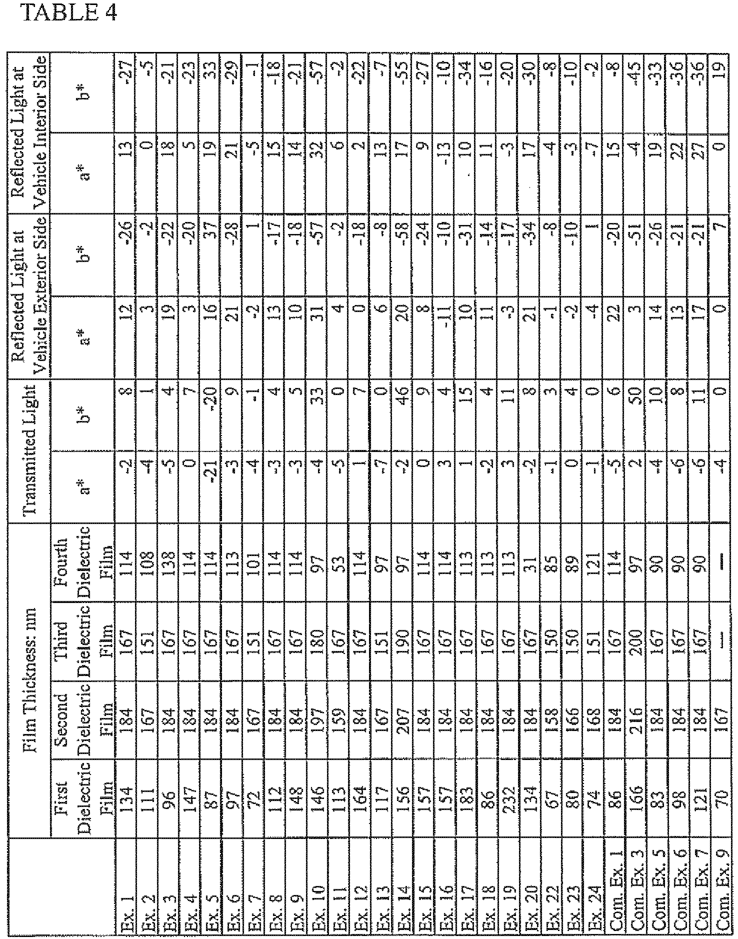

As shown above, particularly in Examples 2, 7, 11 and 22 to 24, the transmitted and reflected hues (a* and b*) of the low radiation film sheet after the heating was 10 or less in absolute value. Excessive color tone was effectively suppressed in the low radiation film sheets of these Examples.

### Description of Reference Numerals

G: Glass plate
1: First metal film
2: Second metal film
3: Third metal film
4. Sacrificial metal film
10: First dielectric film
11: Dielectric layer A
12: Dielectric layer B
13: Crystalline dielectric layer
20: Second dielectric film
22: Anti-reflective layer
23: Crystalline dielectric layer
30: Third dielectric film
32: Anti-reflective layer
33: Crystalline dielectric layer
40: Fourth dielectric film
42: Anti-reflective layer
44: Protective layer
50: Low radiation film sheet
55: Solar radiation shielding member
61: PVB film

## Claims

1. A solar radiation shielding member, comprising:
a transparent substrate; and
a low radiation film sheet including a first dielectric film, a first metal film, a second dielectric film, a second metal film, a third dielectric film, a third metal film and a fourth dielectric film laminated in order of mention on the transparent substrate,
wherein the first dielectric film has: a dielectric layer A arranged directly above the transparent substrate and containing silicon and nitrogen; and a dielectric layer B arranged on the dielectric layer A and containing titanium and oxygen,
wherein the dielectric layer A has an optical thickness of 12 to 86 nm,
wherein the first, second and third dielectric films have respective crystalline dielectric layers as top layers thereof,
wherein the crystalline dielectric layers each have an optical thickness of 5 to 54 nm, and
wherein the first, second and third metal films are Ag films directly below which the crystalline dielectric layers are arranged, respectively.

2. The solar radiation shielding member according to claim 1,
wherein the dielectric layer A is a silicon-containing nitride layer or a silicon-containing oxynitride layer.

3. The solar radiation shielding member according to claim 1 or 2,
wherein the dielectric layer B has an optical thickness of 2 to 100 nm.

4. The solar radiation shielding member according to any one of claims 1 to 3,
wherein the fourth dielectric film has two or more layers including a dielectric layer containing titanium and oxygen and an amorphous dielectric layer containing zinc and oxygen.

5. The solar radiation shielding member according to any one of claims 1 to 4,
wherein a sum of geometric thicknesses of the first to third metal films is 30 to 50 nm, and
wherein a ratio of the geometric thickness of the second metal film to the geometric thickness of each of the first and third metal films is in a range of 1.01 to 1.55.

6. The solar radiation shielding member according to any one of claims 1 to 5, comprising sacrificial metal films arranged on the first, second and third metal films, respectively, and each containing at least one selected from the group consisting of Ti, NiCr, Nb and stainless steel.

7. A processed glass produced by processing a plate glass with heating,
wherein the plate glass is the solar radiation shielding member according to any one of claims 1 to 6.

8. The processed glass according to claim 7,
wherein, in the low radiation film sheet of the solar radiation shielding member, the first dielectric film has an optical thickness of 88 to 120 nm, the second dielectric film has an optical thickness of 164 to 190 nm, the third dielectric film has an optical thickness of 145 to 182 nm, and the fourth dielectric film has an optical thickness of 100 to 123 nm.

9. A laminated glass, comprising two or more plate glasses laminated together via an intermediate resin film,
wherein at least one of the two or more plate glasses is the solar radiation shielding member according to any one of claims 1 to 6.

10. The laminated glass according to claim 9,
wherein, in the low radiation film sheet of the solar radiation shielding member, the first dielectric film has an optical thickness of 57 to 115 nm, the second dielectric film has an optical thickness of 144 to 182 nm, the third dielectric film has an optical thickness of 136 to 182 nm, and the fourth dielectric film has an optical thickness of 38 to 123 nm.
